# EUROPEAN PATENT SPECIFICATION

(11) **EP 2 837 555 B1**
(45) Date of publication and mention of the grant of the patent: **04.09.2019**
(21) Application number: 14168285.6
(22) Date of filing: 14.05.2014
(51) Int. Cl.: B60N 2/07, B64D 11/06, B64C 1/20, B60N 2/015

(54) **Variable-length rail cover for a seat rail**
Abdeckung für eine Sitzschiene mit variabler Länge
Couvercle de rail à longueur variable pour rail de siège

(30) Priority: 27.05.2013 DE 102013105418
(43) Date of publication of application: 18.02.2015
(73) Proprietor: Airbus Operations GmbH, 21129 Hamburg (DE)
(72) Inventor: Schomacker, Lars, 21726 Hagenah (DE)
(74) Representative: LKGLOBAL Lorenz & Kopf PartG mbB Patentanwälte

(56) References cited:
- DE-C1- 3 304 747
- US-A- 4 723 732
- US-A1- 2005 247 820
- US-A1- 2006 097 109
- US-B2- 7 992 834

## Description

### Field of the invention

The invention relates to rail covers for the interior or for the passenger cabin of a means of transport. In particular, the invention relates to a rail cover for a seat rail, a seat arrangement for a passenger cabin of a means of transport and an aircraft with a seat arrangement of this type.

### Technical background of the invention

Seat rails may be configured, in a passenger cabin of a means of transport, to mechanically couple one or more seats to the passenger cabin and, in particular, to the structural elements arranged in the floor of the passenger cabin. A seat rail can allow a displacement of a seat in the passenger cabin, so a seat configuration and, in particular, the distances of seats or rows of seats arranged one behind the other can be adapted. For this purpose, the seat rail generally has an elongate form in the direction of the desired displacement direction of the seats.

If a seat rail is arranged in the floor of a passenger cabin, irregularities in the floor of the passenger cabin, for example, may result owing to the seat rail. In order to avoid or reduce such irregularities in the passenger cabin, once the seat configuration has been adjusted or undertaken, a rail cover can be mounted on the seat rail in the regions of the seat rail, in which no seat leg is located, so the seat rail is, for example, protected against the penetration of extraneous elements and particles of dirt.

US 2011/0049296 A1 describes a seat rail for fastening seats in aircraft. In this case, the seat rail has a region with a substantially C-shaped cross-section in which a seat leg of a seat can be moved in the longitudinal direction of the seat rail.

DE 10 2009 056 414 A1 describes a rail arrangement for a motor vehicle seat with a rail fastened to the vehicle floor and a guide part, which is or can be fastened to the motor vehicle seat and can be displaced in the longitudinal direction along the rail. In this case, a cover device is provided to cover the rail, which cover device has at least one strip-shaped fabric to cover the rail.

US 2006/0097109 A1 describes a seat rail cover with telescopically displaceable sections, which allow an adaptation of the length of the seat rail cover.

US 2005/0247820 A1 describes a power supply system operable to supply power and data to aircraft passenger seats. The power supply system comprises a cable which can be arranged within a seat rail covered by a seat rail cover. The seat rail cover comprises multiple components which are telescopically coupled together.

### Summary of the invention

It can be regarded as the object of the invention to provide a rail cover for a seat rail, which allows the seat configuration to be easily changed.

A rail cover for a seat rail, a seat arrangement for a passenger cabin of a means of transport and an aircraft according to the features of the independent claims are provided. Embodiments of the invention emerge from the dependent claims and from the following description.

A rail cover for a seat rail is disclosed according to one aspect of the invention. The rail cover has a longitudinal portion with a plurality of longitudinal sections, each longitudinal section comprising a first partial longitudinal section and a second partial longitudinal section, the first partial longitudinal section and the second partial longitudinal section abutting one another in the longitudinal direction of the longitudinal section. A first longitudinal section of the plurality of longitudinal sections, with respect to a second longitudinal section abutting the first longitudinal section in the longitudinal direction of the rail cover, is movable in the longitudinal direction of the rail cover. In a non-expanded state of the rail cover, the first partial longitudinal section of the second longitudinal section overlaps the second partial longitudinal section of the first longitudinal section in the longitudinal direction of the rail cover. The rail cover further comprises a resilient coupling element, wherein the resilient coupling element mechanically couples the first longitudinal section to the second longitudinal section, wherein the resilient coupling element is configured to bring the first longitudinal section, with respect to the second longitudinal section, out of the expanded state into the non-expanded state.

In one embodiment, in the non-expanded state of the rail cover, the first partial longitudinal section of the second longitudinal section completely overlaps the second partial longitudinal section of the first longitudinal section in the longitudinal direction of the rail cover.

In one embodiment, in the non-expanded state of the rail cover, the first partial longitudinal section of the first longitudinal section abuts the first partial longitudinal section of the second longitudinal section in the longitudinal direction of the rail cover.

Since adjacent longitudinal sections are in each case movable with respect to one another, the rail cover, as described above and below, has a variable length and can therefore be used to cover a seat rail between two seats, which, with respect to one another, may have a variable distance. Both the first partial longitudinal section and the second partial longitudinal section of a longitudinal section are configured to cover a seat rail. If the first partial longitudinal section of a first longitudinal section is thus moved with respect to the second partial longitudinal section of an adjacent second longitudinal section, the length of the rail cover changes but a cover of the seat rail can continue to be ensured.

The first partial longitudinal section of a first longitudinal section may, for example, be connected by a rail or another connection, which allows a longitudinal movement of two elements, to the second partial longitudinal section of an adjacent longitudinal section. This can, in particular, allow a stepless movement of adjacent longitudinal sections with respect to one another, i.e. adjacent longitudinal sections can be adjusted between a starting point and a maximally expanded point on any desired longitudinal extent.

In the non-expanded state of the rail cover, adjacent longitudinal sections abut one another in the longitudinal direction of the rail cover, so the longitudinal sections can no longer be moved toward one another in the longitudinal direction of the rail cover but only away from one another.

In one embodiment, a longitudinal section of the rail cover is a one piece element.

According to one embodiment of the invention, the first partial longitudinal section of the second longitudinal section at least partially overlaps the second partial longitudinal section of the first longitudinal section in the longitudinal direction of the rail cover in an expanded state of the rail cover.

Both in a fully expanded state and in an only partially expanded state of the rail cover, there is an at least partial overlap of said partial longitudinal sections of adjacent longitudinal sections. Thus, a covering of the seat rail by the rail cover can always be provided.

The rail cover as described above and below therefore allows a variable length portion of a seat rail to be covered. It can therefore be used, for example, in passenger compartments of means of transport to cover the seat rail between seats arranged one behind the other in the longitudinal direction of the seat rail, even if the longitudinal distances between the seats are changed. Providing rigid rail covers of different lengths can thus be avoided.

In the expanded state, the longitudinal sections, in particular longitudinal sections adjacent to one another, can be fixed with respect to one another so the longitudinal sections cannot be moved in relation to one another, i.e. neither away from one another nor toward one another, in the longitudinal direction of the rail cover upon a loading or exertion of force.

According to a further embodiment of the invention, the first partial longitudinal section of a longitudinal section has a first width and the second partial longitudinal section of this longitudinal section has a second width, the second width being smaller than the first width.

This embodiment, in particular, allows the second partial longitudinal section of a longitudinal section to be encompassed by the first partial longitudinal section of an adjacent longitudinal section, the second partial longitudinal section being movable with respect to the first partial longitudinal section.

The first partial longitudinal section of a longitudinal section can at least partially encompass the second partial longitudinal section of an adjacent longitudinal section, so a movement of the longitudinal sections in the longitudinal direction of the rail cover with respect to one another is possible.

According to a further embodiment of the invention, the rail cover furthermore has a resilient coupling element, the resilient coupling element mechanically coupling the first longitudinal section to the second longitudinal section, and the resilient coupling element being configured to bring the first longitudinal section, with respect to the second longitudinal section, out of the expanded state into the non-expanded state.

The resilient coupling element has a resilient property or a clamping force, this clamping force specifically ensuring that the adjacent longitudinal sections connected to the resilient coupling element, upon an absence of a holding force in the expanded state, return to the non-expanded state. The starting state or basic state of the rail cover is therefore the non-expanded state, into which the adjacent longitudinal sections are brought by the resilient coupling element. The resilient coupling element may, for example, be a rubber band or a spring.

According to a further embodiment of the invention, at least one longitudinal section comprises a clamping element, which is configured to mechanically couple the rail cover to the seat rail.

In one embodiment, each longitudinal section may comprise a clamping element of this type.

The clamping element may be configured to connect the rail cover by frictional or positive locking to a seat rail in such a way that it is only possible to remove the rail cover from the seat rail after overcoming a withdrawal resistance. Furthermore, the clamping element can be configured in such a way that a movement of the rail cover or at least of a longitudinal section in the longitudinal direction of the seat rail remains possible, even if the rail cover is connected to the seat rail.

According to a further embodiment of the invention, the resilient coupling element is coupled to the clamping element of the first longitudinal section and to the clamping element of the second longitudinal section.

The resilient coupling element is therefore arranged in such a way that, in an assembled state of the rail cover, it runs in a cavity of the seat rail, in which the clamping element of the rail cover also runs in the assembled state.

According to a further embodiment of the invention, the rail cover furthermore comprises an expansion-limiting element, which is arranged between the first longitudinal section and the second longitudinal section in such a way that on reaching a maximum expansion, a further removal of the first longitudinal section from the second longitudinal section in the longitudinal direction is prevented.

The expansion-limiting element may be accorded a double function, namely, firstly, protection of the resilient coupling element from an excessive expansion and, on the other hand, to prevent adjacent longitudinal sections being completely released from one another. The maximum expansion of the resilient coupling element or the maximum extension of adjacent longitudinal sections corresponds here to a length of the expansion-limiting element. The expansion-limiting element may, in particular, be a textile band, a plastics material component or a metal component, in particular made of aluminum, which substantially has no resilience.

According to a further embodiment of the invention, the expansion-limiting element is mechanically coupled to the clamping element of the first longitudinal section and to the clamping element of the second longitudinal section.

As already shown, the expansion-limiting element together with the clamping elements is therefore arranged in a cavity of the seat rail in an assembled state of the rail cover.

According to a further embodiment of the invention, the first longitudinal section is reversibly coupled to the second longitudinal section, so a length of the rail cover can be varied by the release or insertion of a longitudinal section.

A reversible connection of adjacent longitudinal sections means that adjacent longitudinal sections can be released from one another and also connected to one another again. This can likewise require a reversible connection between the resilient coupling element and the longitudinal sections, and the expansion-limiting element and the longitudinal sections.

According to a further embodiment of the invention, the rail cover furthermore has a first end portion and a second end portion, the plurality of longitudinal sections being arranged in a centre portion between the first end portion and the second end portion. In this case, the first end portion and the second end portion in each case comprise a fastening element, which is configured to mechanically couple the rail cover to the seat rail.

The assembly of the rail cover as described above and below can therefore basically take place in two ways. Either the first end portion can be connected to the seat rail by the fastening element associated with it - the length of the centre portion can then be adjusted and the second end portion can also be connected to the seat rail - or the required length of the rail cover is adjusted before the assembly of the rail cover in order to then couple the rail cover or the first end portion and the second end portion to the seat rail.

According to a further aspect of the invention, a seat arrangement for a passenger cabin of a means of transport is provided. The seat arrangement comprises a seat rail, a first seat and a second seat adjacent to the first seat in the longitudinal direction of the seat rail and a rail cover as described above and below. In this case, the rail cover is arranged in such a way that a cavity of the seat rail in the longitudinal direction of the seat rail between the first seat and the second seat is covered, and, in particular, completely covered.

The means of transport may be an aircraft, a landcraft or a watercraft. In particular, the means of transport may be an airplane.

The cavity to be covered by the rail cover is that region of the seat rail, in which the seats are moved, when a seat configuration is changed in the passenger cabin. It is precisely this cavity that has to be protected against the penetration of dirt particles and other extraneous elements by covering with the rail cover. Likewise, covering the seat rail with a rail cover can reduce a danger of tripping due to the seat rail.

According to a further embodiment of the invention, the first fastening element couples the first end portion to a first recess of the seat rail and the second fastening element couples the second end portion to a second recess of the seat rail, so the cavity between the first seat and the second seat in the longitudinal direction of the seat rail is completely covered.

The fastening elements of the end portions of the rail cover can thus be coupled to the seat rail in the same way as the seats are coupled to the seat rail, so no other type of fastening to the seat rail has to be provided for the fastening elements of the rail cover.

According to a further embodiment of the invention, the two end portions are mechanically coupled to seats arranged one behind the other in the longitudinal direction of the seat rail. In particular, the end portions can be mechanically coupled to the seat legs in the region of the seat rail.

Thus, the seat rail arranged between these seats is covered by the rail cover, the rail cover not having to be removed from the seat rail for a displacement process of a seat, as the end portions move together with the seats or their seat legs.

According to a further embodiment of the invention, the clamping element of each longitudinal section is arranged in the cavity of the seat rail.

The clamping element may be a lip in the longitudinal direction of the rail cover and, for example, comprise a resilient material. The resilient material may be pressed, in the assembled state of the rail cover, against the seat rail and thus ensure that a movement of a longitudinal section with respect to the seat rail is made more difficult or avoided. In addition, at least one part of a surface of the clamping element may be provided with an anti-slip coating. An anti-slip coating of this type is characterized by an increased coefficient of friction with respect to the base material of the clamping element. For example, this anti-slip coating may comprise rubber or plastics material.

According to a further embodiment of the invention, the resilient coupling element is arranged in the cavity or runs in the cavity when the rail cover is in the assembled state.

An aircraft with a seat arrangement as described above and below is provided according to a further aspect of the invention.

Embodiments of the invention will be described below with reference to the figures.
Fig. 1 shows a schematic view of a rail cover according to one exemplary embodiment of the invention.
Fig. 2A shows a schematic view of a longitudinal section of a rail cover according to a further exemplary embodiment of the invention.
Fig. 2B shows a schematic view of a cover element of a rail cover according to a further exemplary embodiment of the invention.
Fig. 2C shows a schematic view of a seat rail with a rail cover according to a further exemplary embodiment of the invention.
Fig. 3A shows a schematic view of an end portion of a rail cover according to a further exemplary embodiment of the invention.
Fig. 3B shows a schematic view of an end portion of a rail cover according to a further exemplary embodiment of the invention.
Fig. 4 shows a schematic view of a longitudinal section of a rail cover according to a further exemplary embodiment of the invention.
Fig. 5 shows a schematic view of a centre portion of a rail cover according to a further exemplary embodiment of the invention.
Fig. 6 shows a schematic view of a rail cover according to a further exemplary embodiment of the invention.
Fig. 7A shows a schematic view of a rail cover according to a further exemplary embodiment of the invention in the non-expanded state.
Fig. 7B shows a schematic view of a rail cover according to a further exemplary embodiment of the invention in an expanded state.
Fig. 8 shows a schematic view of a seat rail for a seat arrangement according to a further exemplary embodiment of the invention.
Fig. 9 shows a schematic view of an aircraft with a seat arrangement according to a further exemplary embodiment of the invention.

The views in the figures are schematic and not to scale. If the same reference numerals are used in the following figures, these refer to the same or similar elements.

### Detailed description of the figures

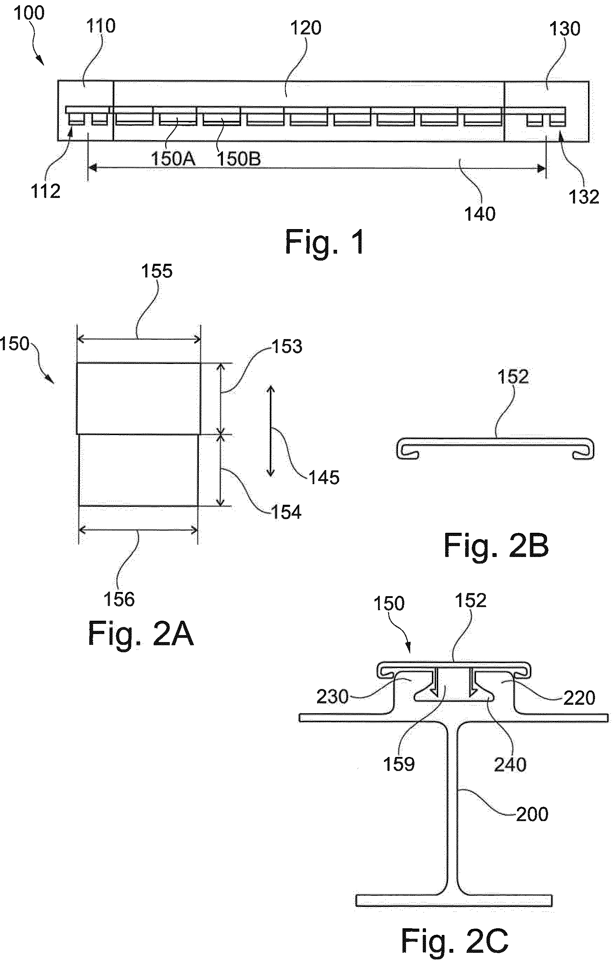

Fig. 1 shows a rail cover 100 with a first end portion 110, a centre portion 120 and a second end portion 130, the centre portion 120 in the longitudinal direction 140 of the rail cover 100 being arranged between the first end portion and the second end portion. The portions 110, 120, 130 are only framed for illustration purposes. The centre portion 120 comprises a plurality of longitudinal sections 150, a first longitudinal section 150A and a second longitudinal section 150B adjacent thereto being movable in the longitudinal direction 140 of the rail cover 100 with respect to one another, in order to thus be able to vary a length 140 of the rail cover.

The first end portion 110 comprises a fastening element 112 and the second end portion 130 comprises a fastening element 132, the fastening elements 112, 132 being configured to mechanically couple the rail cover to a seat rail in such a way that the rail cover covers the seat rail in the longitudinal direction including between the first end portion and the second end portion in each case.

Fig. 2A shows a plan view of a longitudinal section 150 of the rail cover 100 shown in a side view in Fig. 1. The longitudinal section 150 comprises a first partial longitudinal section 153 and a second partial longitudinal section 154, the second partial longitudinal section 154, in the longitudinal direction 145 of the rail cover or the longitudinal section, abutting the first partial longitudinal section 153. The first partial longitudinal section 153 has a width 155 and the second partial longitudinal section 154 has a width 156, the width 156 being smaller than the width 155. This means that the width 155 of the first partial longitudinal section 153 extends to a greater extent in a direction transverse to the longitudinal direction 145 than the width 156 of the second partial longitudinal section 154.

The interaction of adjacent longitudinal sections in the centre portion 120 can also be illustrated with the aid of the view of the longitudinal section in Fig. 2A. The first partial longitudinal section 153, because of its increased width 155, is configured to be able to overlap the second partial longitudinal section of a longitudinal section that is adjacent in the longitudinal direction 145 if the adjacent longitudinal sections are moved with respect to one another.

The length of the first partial longitudinal section 153 may be equal to the length of the second partial longitudinal section 154. Alternatively, the first partial longitudinal section may be longer or shorter than the second partial longitudinal section. Depending on these length ratios of the first and second partial longitudinal section, in the non-expanded state, either the first partial longitudinal section of a first longitudinal section will abut the first partial longitudinal section of an adjacent longitudinal section or, in the non-expanded state, the second partial longitudinal section of adjacent longitudinal sections will in each case abut one another. If the first partial longitudinal section is the same length as the second partial longitudinal section, in the non-expanded state, both the first partial longitudinal sections and the second partial longitudinal sections of adjacent longitudinal sections abut one another.

Fig. 2B shows a front view of a cover element 152 of a longitudinal section 150. The cover element 152 is that component of the longitudinal section 150 that can be seen in the plan view of Fig. 2A and which covers the seat rail. The cover element 152 is bent round at its edges (this is the left-hand or right-hand edge in the view in Fig. 2B), so adjacent longitudinal sections can engage in one another in a rail-like manner or in accordance with the principles of a sliding joint and can be moved in the longitudinal direction, in this case, from the plane of the drawing or into the plane of the drawing.

Fig. 2C shows a front view of a seat rail 200 with an assembled rail cover 100. The seat rail comprises a first overhang 220 and a second overhang 230, which are C-shaped or U-shaped and form a cavity 240, in which seats are assembled and in which the clamping element 159 of a longitudinal section 150 runs in the assembled state of the rail cover. It can furthermore be inferred from Fig. 2C that the cover element 152 covers said cavity 240 in the assembled state of the rail cover.

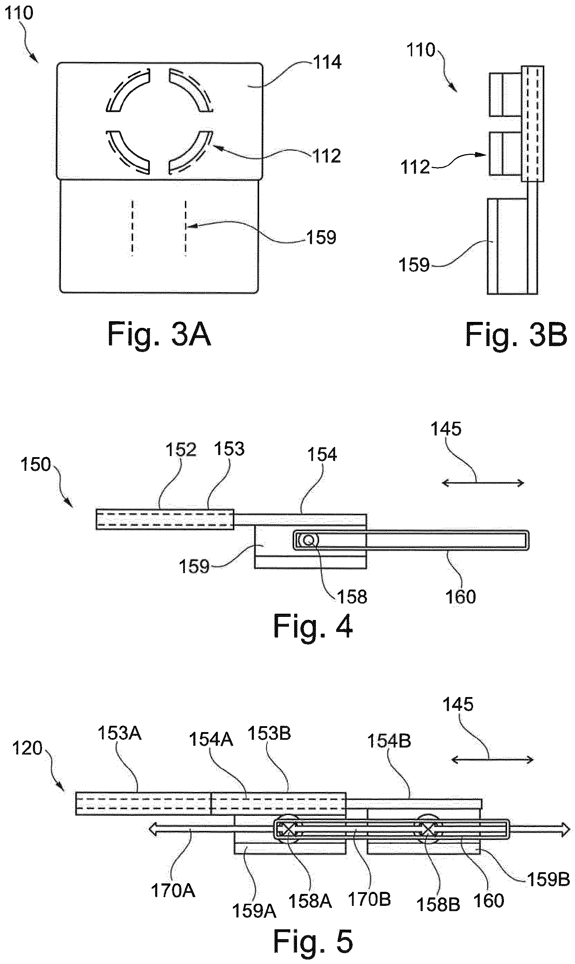

Fig. 3A shows a plan view of the first end portion 110 of a rail cover. The first end portion 110 has a similar structure in the longitudinal direction to a longitudinal section of the centre portion, i.e. that the first end portion has a first partial longitudinal section and a second partial longitudinal section, the widths of which differ from one another, so the first end portion and the centre portion can be coupled to one another in the same way as the longitudinal sections of the centre portion are coupled to one another. The first end portion 110 comprises a fastening element 112, which mechanically couples the first end portion to the seat rail and is, in particular, configured in such a way that a movement of the first end portion 110 in a longitudinal direction of the seat rail is prevented because of a positive locking.

Just as a longitudinal section of the centre portion has a cover element 152, the first end portion has a cover face 114 to cover the cavity of the seat rail.

Fig. 3B shows a side view of the first end portion 110. It can be seen that both the fastening element 112 and the clamping element 159 project from the cover face and are configured to extend into the cavity of the seat rail in the assembled state of the rail cover. The fastening element 112, in comparison to the clamping element 159, has a greater width, i.e. a greater extent transversely to the longitudinal direction of the rail cover, as can be seen from Fig. 3A.

Fig. 4 shows a side view of a longitudinal section 150 with a cover element 152, a first partial longitudinal section 153 and a second partial longitudinal section 154, as well as a clamping element 159. Arranged on the clamping element 159 is a coupling lug 158, which is configured to engage with the expansion-limiting element 160.

The interaction of adjacent longitudinal sections 150 in the centre portion 120 can be seen from Fig. 5. The first partial longitudinal section 153B of the second longitudinal section overlaps the second partial longitudinal section 154A of the first longitudinal section, these two longitudinal sections being located in the non-expanded state, which emerges from the fact that the first partial longitudinal sections 153A, 153B abut one another in the longitudinal direction 145. In this non-expanded state, the resilient coupling element 170B pulls the coupling lug 158B in the direction of the coupling lug 158A or *vice versa.* If one of the longitudinal sections 150A, 150B is moved in the longitudinal direction away from the other longitudinal section, this takes place counter to the clamping force of the resilient coupling element 170B, which connects the longitudinal sections 150A, 150B to one another. The coupling lugs 158A, 158B can move in the longitudinal direction of the expansion-limiting element 160 until the coupling lugs have reached the ends of the expansion-limiting element that are opposing in the longitudinal direction. The expansion-limiting element shown in Fig.5 encompasses the coupling lugs in the manner of clips and thus allows a relative movement of the coupling lugs with respect to the expansion-limiting element. In an alternative embodiment, the expansion-limiting element in the form of a substantially non-resilient band can be rigidly coupled to the longitudinal sections, so a movement of the longitudinal sections with respect to one another and, in particular away from one another, is determined by the length of a band of this type.

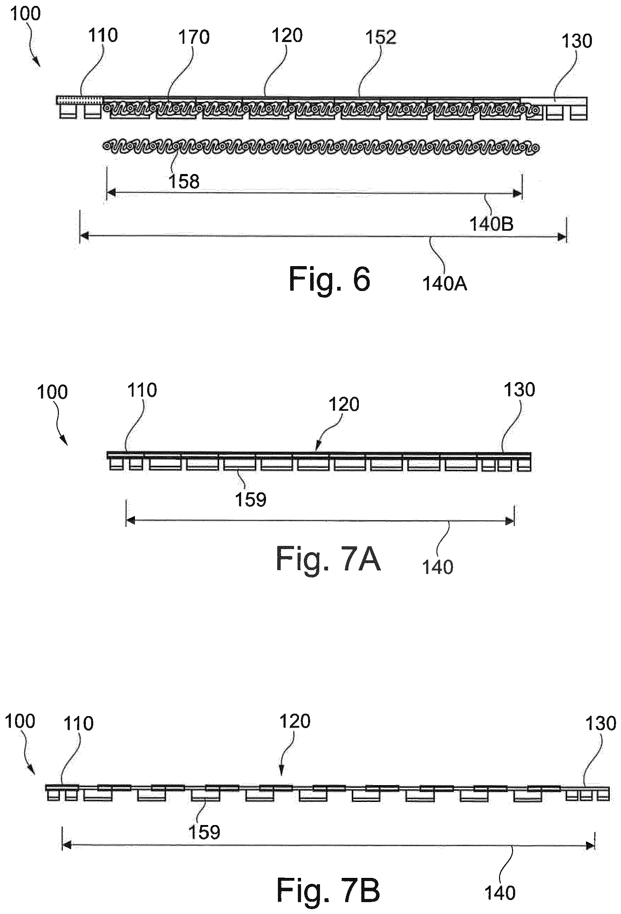

Fig. 6 shows a rail cover 100, the longitudinal sections of the centre portion 120 being connected to one another by a resilient coupling element 170 in the same way as was shown in Fig. 5 for two adjacent longitudinal sections. In addition, the end portions 110, 130 are also connected to a respective longitudinal section of the centre portion by means of a resilient coupling element 170 in order to thus also allow a movement of the end portions with respect to the adjacent longitudinal section, in each case, of the centre portion analogously to the movement of two adjacent longitudinal sections with respect to one another. In the non-expanded state of the rail cover, which is shown in Fig. 6, the resilient coupling element 170 can run in a serpentine manner, in order to be attached to the rail cover in as space-saving a manner as possible. The length 140A shows the distance of the end portions 110, 130 from one another, whereas the length 140B shows the length of the centre portion 120. The length of the rail cover 100 is produced by an adaptation of the length 140B of the centre portion 120.

In order to be able to shorten the length of the rail cover 100 still further in the non-expanded state, individual longitudinal sections 150 can be removed from the centre portion 120. This likewise relates to the associated resilient coupling elements 170, which also have to be correspondingly released when removing individual longitudinal sections 150.

The coupling elements 170, which, in each case, resiliently couple adjacent longitudinal sections 150 to one another, can, in particular, be configured in the same way, i.e. have substantially the same coefficient of expansion, so when transferring the rail cover from the non-expanded state into the expanded or partially expanded state, a uniform extension, i.e. spacing of the longitudinal sections from one another, takes place.

Fig. 7A and 7B show a comparison of a rail cover 100 in a non-expanded state (Fig. 7A) and in the expanded state (Fig. 7B).

The length 140 of the rail cover 110 is substantially allowed by a relative movement of adjacent longitudinal sections in the centre portion 120.

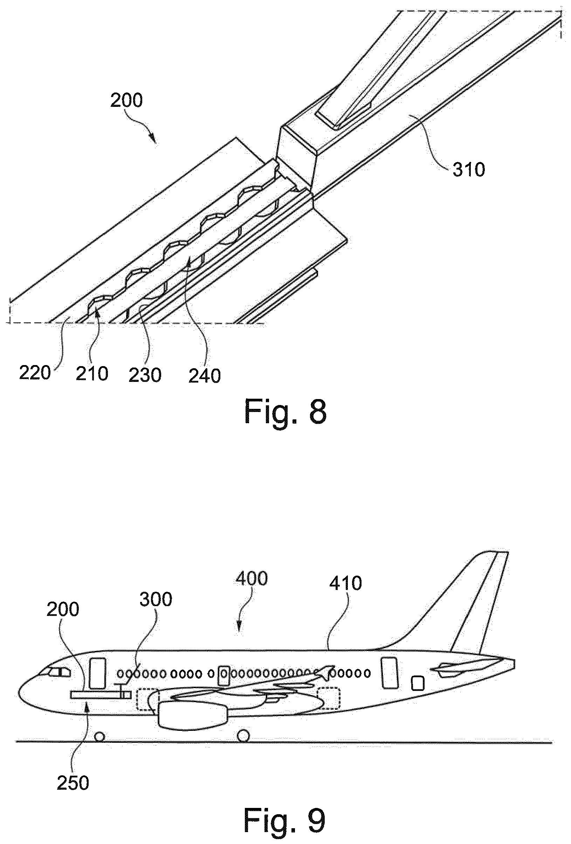

Fig. 8 shows a schematic view of a seat rail 200 with a seat leg 310 of a seat (not shown) assembled in the seat rail. The seat rail 200 has a first overhang 220 and a second overhang 230, which at least partially encompass the cavity 240. Indentations 210, which allow the seat leg 310 to be fixed, are provided both in the first overhang 220 and in the second overhang 230 at regular intervals. Precisely these indentations 210 also allow the fastening of the end portions 110, 130, as the fastening elements 112, 132 are configured in such a way that they can be fitted therein.

Fig. 9 shows the use of a seat rail arrangement 250 with a seat rail 200 and a seat 300 in the passenger cabin 410 of an aircraft 400.

In one embodiment of the rail cover, the length or the distance between the fastening elements of the end portions may be 254 mm (10 inches). This distance, when the rail cover is transitioned from the non-expanded state into the maximally expanded state, can be increased to, for example, 381 mm (15 inches) up to 432 mm (17 inches). The length of the centre portion in the non-expanded state may be 216 mm (8.5 inches). A longitudinal section, in one embodiment, may have a length of 48 mm, which is divided in equal parts over the first partial longitudinal section and the second partial longitudinal section, each of 24 mm. The width of the first partial longitudinal section may be 40 mm, whereas the width of the second partial longitudinal section may be 36 to 38 mm.

### List of reference signs

- 100: rail cover
- 110: first end portion
- 112: fastening element
- 114: cover face
- 120: centre portion
- 130: second end portion
- 132: fastening element
- 140: length
- 145: length direction
- 150: longitudinal section
- 152: cover element
- 153: first partial longitudinal section
- 154: second partial longitudinal section
- 155: width of the first partial longitudinal section
- 156: width of the second partial longitudinal section
- 158: coupling lug
- 159: clamping element
- 160: expansion-limiting element
- 170: resilient coupling element
- 200: seat rail
- 210: indentation
- 220: first overhang
- 230: second overhang
- 240: cavity
- 250: seat rail arrangement
- 300: seat
- 310: seat leg
- 400: aircraft
- 410: passenger cabin

## Claims

1. Rail cover (100) for a seat rail (200), the rail cover comprising:
a plurality of longitudinal sections (150); wherein each longitudinal section (150) comprises a first partial longitudinal section (153) and a second partial longitudinal section (154), which abut one another in the longitudinal direction of the longitudinal section; wherein a first longitudinal section (150A) is movable in the longitudinal direction of the rail cover with respect to a second longitudinal section (150B) abutting the first longitudinal section (150A) in the longitudinal direction (145) of the rail cover; wherein in a non-expanded state of the rail cover (100), the first partial longitudinal section (153B) of the second longitudinal section (150B) overlaps the second partial longitudinal section (154A) of the first longitudinal section (150A) in the longitudinal direction of the rail cover;
**characterized in that**
the rail cover further comprises a resilient coupling element (170); wherein the resilient coupling element (170) mechanically couples the first longitudinal section (150A) to the second longitudinal section (150B); wherein the resilient coupling element (170) is configured to bring the first longitudinal section (150A), with respect to the second longitudinal section (150B), out of the expanded state into the non-expanded state by a clamping force upon absence of a holding force in the expanded state.

2. Rail cover according to claim 1, wherein, in an expanded state of the rail cover, the first partial longitudinal section (153B) of the second longitudinal section (150B) at least partially overlaps the second partial longitudinal section (154A) of the first longitudinal section (150A) in the longitudinal direction of the rail cover.

3. Rail cover according to either claim 1 or 2, wherein the first partial longitudinal section (153) of a longitudinal section (150) has a first width (155) and the second partial longitudinal section (154) of this longitudinal section has a second width (156); wherein the second width (156) is smaller than the first width (155).

4. Rail cover according to any one of the preceding claims, wherein at least one longitudinal section (150) comprises a clamping element (159), which is configured to mechanically couple the rail cover to the seat rail.

5. Rail cover according to claim 4, wherein the resilient coupling element (170) is mechanically coupled to the clamping element (159A) of the first longitudinal section (150A) and to the clamping element (159B) of the second longitudinal section (150B).

6. Rail cover according to any one of the preceding claims, furthermore comprising an expansion-limiting element (160), which is arranged between the first longitudinal section (150A) and the second longitudinal section (150B) in such a way that on reaching a maximum expansion, a further removal of the first longitudinal section from the second longitudinal section in the longitudinal direction is prevented.

7. Rail cover according to claim 6, wherein the expansion-limiting element (160) is mechanically coupled to the clamping element (159A) of the first longitudinal section (150A) and to the clamping element (159B) of the second longitudinal section (150B).

8. Rail cover according to any one of the preceding claims, wherein the first longitudinal section (150A) is reversibly coupled to the second longitudinal section (150B), so a length (140) of the rail cover can be varied by releasing or inserting a longitudinal section.

9. Rail cover according to any one of the preceding claims, furthermore comprising a first end portion (110) and a second end portion (130); wherein the plurality of longitudinal sections (150) is arranged in a centre portion (120) between the first end portion (110) and the second end portion (130); wherein the first end portion (110) and the second end portion (130) in each case comprise a fastening element (112, 132), which is configured to mechanically couple the rail cover to the seat rail.

10. Seat arrangement (250) for a passenger cabin (310) of a means of transport, the seat arrangement comprising: a seat rail (200); a first seat and a second seat adjacent to the first seat in the longitudinal direction (145) of the seat rail (200); and a rail cover (100) according to any one of claims 1 to 9; wherein the rail cover is arranged in such a way that a cavity (240) of the seat rail in the longitudinal direction of the seat rail is covered between the first seat and the second seat.

11. Seat arrangement (250) according to claim 10, wherein the first fastening element (112) couples the first end portion (110) to a first recess (210) of the seat rail (200) and the second fastening element (132) couples the second end portion (130) to a second recess (210) of the seat rail (200), so the cavity (240) between the first seat and the second seat is completely covered.

12. Seat arrangement (250) according to claim 10 or 11, wherein the clamping element (170) of each longitudinal section (150) is arranged in the cavity (240) of the seat rail.

13. Seat arrangement (250) according to any one of claims 10 to 12, wherein the resilient coupling element (170) runs in the cavity (140).

14. Aircraft (400) with a seat arrangement (250) according to any one of claims 10 to 13.

## Patentansprüche

1. Schienenabdeckung (100) für eine Sitzschiene (200), die Schienenabdeckung aufweisend:
mehrere Längssektionen (150); wobei jede Längssektion (150) eine erste Teillängssektion (153) und eine zweite Teillängssektion (154) aufweist, die in der Längsrichtung der Längssektion aneinander angrenzen; wobei eine erste Längssektion (150A) in der Längsrichtung der Schienenabdeckung bezüglich einer zweiten Längssektion (150B), welche an die erste Längssektion (150A) in der Längsrichtung (145) der Schienenabdeckung angrenzt, beweglich ist; wobei in einem nicht ausgezogenen Zustand der Schienenabdeckung (100) die erste Teillängssektion (153B) der zweiten Längssektion (150B) die zweite Teillängssektion (154A) der ersten Längssektion (150A) in der Längsrichtung der Schienenabdeckung überdeckt;
**dadurch gekennzeichnet, dass**
die Schienenabdeckung ferner ein elastisches Kupplungselement (170) aufweist; wobei das elastische Kupplungselement (170) die erste Längssektion (150A) mechanisch an die zweite Längssektion (150B) kuppelt; wobei das elastische Kupplungselement (170) zum Verbringen der ersten Längssektion (150A) bezüglich der zweiten Längssektion (150B) aus dem ausgezogenen Zustand in den nicht ausgezogenen Zustand konfiguriert ist, durch eine Einspannkraft nach Abwesenheit einer Haltekraft im ausgezogenen Zustand.

2. Schienenabdeckung nach Anspruch 1, wobei, in einem ausgezogenen Zustand der Schienenabdeckung, die erste Teillängssektion (153B) der zweiten Längssektion (150B) die zweite Teillängssektion (154A) der ersten Längssektion (150A) in der Längsrichtung der Schienenabdeckung mindestens teilweise überdeckt.

3. Schienenabdeckung nach einem der Ansprüche 1 oder 2, wobei die erste Teillängssektion (153) einer Längssektion (150) eine erste Breite (155) aufweist und die zweite Teillängssektion (154) dieser Längssektion eine zweite Breite (156) aufweist; wobei die zweite Breite (156) geringer als die erste Breite (155) ist.

4. Schienenabdeckung nach einem der vorhergehenden Ansprüche, wobei mindestens eine Längssektion (150) ein Einspannelement (159) aufweist, das zum mechanischen Kuppeln der Schienenabdeckung an die Sitzschiene konfiguriert ist.

5. Schienenabdeckung nach Anspruch 4, wobei das elastische Kupplungselement (170) mechanisch an das Einspannelement (159A) der ersten Längssektion (150A) und das Einspannelement (159B) der zweiten Längssektion (150B) gekuppelt ist.

6. Schienenabdeckung nach einem der vorhergehenden Ansprüche, zudem aufweisend ein Auszugsbegrenzungselement (160), das derart zwischen der ersten Längssektion (150A) und der zweiten Längssektion (150B) angeordnet ist, dass beim Erreichen eines maximalen Auszugs eine weitere Entfernung der ersten Längssektion von der zweiten Längssektion in der Längsrichtung verhindert ist.

7. Schienenabdeckung nach Anspruch 6, wobei das Auszugsbegrenzungselement (160) mechanisch an das Einspannelement (159A) der ersten Längssektion (150A) und das Einspannelement (159B) der zweiten Längssektion (150B) gekuppelt ist.

8. Schienenabdeckung nach einem der vorhergehenden Ansprüche, wobei die erste Längssektion (150A) reversibel an die zweite Längssektion (150B) gekuppelt ist, sodass eine Länge (140) der Schienenabdeckung durch Lösen oder Einfügen einer Längssektion variiert werden kann.

9. Schienenabdeckung nach einem der vorhergehenden Ansprüche, zudem aufweisend einen ersten Endabschnitt (110) und einen zweiten Endabschnitt (130); wobei die mehreren Längssektionen (150) in einem Mittelabschnitt (120) zwischen dem ersten Endabschnitt (110) und dem zweiten Endabschnitt (130) angeordnet sind; wobei der erste Endabschnitt (110) und der zweite Endabschnitt (130) in jedem Falle ein Befestigungselement (112, 132) aufweisen, das zum mechanischen Kuppeln der Schienenabdeckung an die Sitzschiene konfiguriert ist.

10. Sitzanordnung (250) für eine Passagierkabine (310) eines Transportmittels, die Sitzanordnung aufweisend: eine Sitzschiene (200); einen ersten Sitz und einen zweiten Sitz, der dem ersten Sitz in der Längsrichtung (145) der Sitzschiene (200) benachbart ist; und eine Schienenabdeckung (100) nach einem der Ansprüche 1 bis 9; wobei die Schienenabdeckung derart angeordnet ist, dass ein Hohlraum (240) der Sitzschiene in der Längsrichtung der Sitzschiene zwischen dem ersten Sitz und dem zweiten Sitz abgedeckt ist.

11. Sitzanordnung (250) nach Anspruch 10, wobei das erste Befestigungselement (112) den ersten Endabschnitt (110) an eine erste Aussparung (210) der Sitzschiene (200) kuppelt und das zweite Befestigungselement (132) den zweiten Endabschnitt (130) an eine zweite Aussparung (210) der Sitzschiene (200) kuppelt, sodass der Hohlraum (240) zwischen dem ersten Sitz und dem zweiten Sitz vollständig abgedeckt ist.

12. Sitzanordnung (250) nach Anspruch 10 oder 11, wobei das Einspannelement (170) jeder Längssektion (150) im Hohlraum (240) der Sitzschiene angeordnet ist.

13. Sitzanordnung (250) nach einem der Ansprüche 10 bis 12, wobei das elastische Kupplungselement (170) im Hohlraum (140) verläuft.

14. Luftfahrzeug (400) mit einer Sitzanordnung (250) nach einem der Ansprüche 10 bis 13.

## Revendications

1. Couvercle de rail (100) pour un rail de siège (200), le couvercle de rail comprenant:
une pluralité de sections longitudinales (150); chaque section longitudinale (150) comprenant une première section longitudinale partielle (153) et une seconde section longitudinale partielle (154), qui sont en butée l'une contre l'autre dans la direction longitudinale de la section longitudinale; une première section longitudinale (150A) étant mobile dans la direction longitudinale du couvercle de rail par rapport à une seconde section longitudinale (150B), en butée contre la première section longitudinale (150A) dans la direction longitudinale (145) du couvercle de rail; dans un état non étendu du couvercle de rail (100), la première section longitudinale partielle (153B) de la seconde section longitudinale (150B) recouvre la seconde section longitudinale partielle (154A) de la première section longitudinale (150A) dans la direction longitudinale du couvercle de rail;
**caractérisé en ce que**
le couvercle de rail comprend en outre un élément d'accouplement élastique (170); l'élément d'accouplement élastique (170) couplant mécaniquement la première section longitudinale (150A) à la seconde section longitudinale (150B); l'élément d'accouplement élastique (170) étant configuré pour amener la première section longitudinale (150A), par rapport à la seconde section longitudinale (150B), de l'état dilaté à l'état non dilaté, par une force de serrage en l'absence d'une force de maintien à l'état dilaté.

2. Couvercle de rail selon la revendication 1, dans lequel, dans un état dilaté du couvercle de rail, la première section longitudinale partielle (153B) de la seconde section longitudinale (150B) recouvre au moins partiellement la seconde section longitudinale partielle (154A) de la première section longitudinale (150A) dans la direction longitudinale du couvercle de rail.

3. Couvercle de rail selon la revendication 1 ou 2, dans lequel la première section longitudinale partielle (153) d'une section longitudinale (150) a une première largeur (155) et la seconde section longitudinale partielle (154) de cette section longitudinale a une seconde largeur (156); la seconde largeur (156) étant inférieure à la première largeur (155).

4. Couvercle de rail selon l'une quelconque des revendications précédentes, dans lequel au moins une section longitudinale (150) comprend un élément de serrage (159), qui est configuré pour coupler mécaniquement le couvercle de rail au rail de siège.

5. Couvercle de rail selon la revendication 4, dans lequel l'élément d'accouplement élastique (170) est couplé mécaniquement à l'élément de serrage (159A) de la première section longitudinale (150A) et à l'élément de serrage (159B) de la seconde section longitudinale (150B).

6. Couvercle de rail selon l'une quelconque des revendications précédentes, comprenant en outre un élément de limitation de dilatation (160), qui est disposé entre la première section longitudinale (150A) et la seconde section longitudinale (150B) de telle sorte qu'en atteignant une dilatation maximale, un enlèvement supplémentaire de la première section longitudinale à partir de la seconde section longitudinale dans la direction longitudinale soit empêché.

7. Couvercle de rail selon la revendication 6, dans lequel l'élément de limitation de dilatation (160) est couplé mécaniquement à l'élément de serrage (159A) de la première section longitudinale (150A) et à l'élément de serrage (159B) de la seconde section longitudinale (150B).

8. Couvercle de rail selon l'une quelconque des revendications précédentes, dans lequel la première section longitudinale (150A) est couplée de manière réversible à la seconde section longitudinale (150B), de sorte qu'une longueur (140) du couvercle de rail peut être modifiée en libérant ou en insérant une section longitudinale.

9. Couvercle de rail selon l'une quelconque des revendications précédentes, comprenant en outre une première partie d'extrémité (110) et une seconde partie d'extrémité (130); la pluralité de sections longitudinales (150) étant disposée dans une partie centrale (120) entre la première partie d'extrémité (110) et la seconde partie d'extrémité (130); la première partie d'extrémité (110) et la seconde partie d'extrémité (130) comprenant respectivement un élément de fixation (112, 132) qui est configuré pour coupler mécaniquement le couvercle de rail au rail de siège.

10. Agencement de siège (250) pour une cabine de passagers (310) d'un moyen de transport, l'agencement de siège comprenant: un rail de siège (200); un premier siège et un second siège adjacent au premier siège dans la direction longitudinale (145) du rail de siège (200); et un couvercle de rail (100) selon l'une quelconque des revendications 1 à 9; le couvercle de rail étant disposé de telle manière qu'une cavité (240) du rail de siège dans la direction longitudinale du rail de siège soit recouverte entre le premier siège et le second siège.

11. Agencement de siège (250) selon la revendication 10, dans lequel le premier élément de fixation (112) couple la première partie d'extrémité (110) à un premier évidement (210) du rail de siège (200) et le second élément de fixation (132) couple la seconde partie d'extrémité (130) à un second évidement (210) du rail de siège (200), de sorte que la cavité (240) entre le premier siège et le second siège soit complètement recouverte.

12. Agencement de siège (250) selon la revendication 10 ou 11, dans lequel l'élément de serrage (170) de chaque section longitudinale (150) est disposé dans la cavité (240) du rail de siège.

13. Agencement de siège (250) selon l'une quelconque des revendications 10 à 12, dans lequel l'élément d'accouplement élastique (170) s'étend dans la cavité (140).

14. Aéronef (400) avec un agencement de siège (250) selon l'une quelconque des revendications 10 à 13.
